**Europäisches Patentamt**

**European Patent Office**

**Office européen des brevets**

(19)

(11) Veröffentlichungsnummer : **0 040 676**
**B1**

(12) **EUROPÄISCHE PATENTSCHRIFT**

(45) Veröffentlichungstag der Patentschrift :
02.05.84

(21) Anmeldenummer : **81101968.6**

(22) Anmeldetag : **17.03.81**

(51) Int. Cl.³ : **F 24 F  6/04**, F 25 D  1/00

(54) **Behälter für Lebensmittel.**

(30) Priorität : **24.05.80 DE 3019938**

(43) Veröffentlichungstag der Anmeldung :
**02.12.81 Patentblatt 81/48**

(45) Bekanntmachung des Hinweises auf die Patenterteilung : **02.05.84 Patentblatt 84/18**

(84) Benannte Vertragsstaaten :
**AT BE CH FR GB IT LI LU NL SE**

(56) Entgegenhaltungen :
**AU-B-  497 647**
**CH-A-  411 010**
**DE-B- 1 295 166**
**DE-C-   74 011**
**FR-A- 2 086 743**
**GB-A-  303 232**
**US-A- 1 422 365**
**US-A- 3 935 802**
**US-A- 4 041 900**

(73) Patentinhaber : **Gebrüder Ruch GmbH & Co KG**
**Appenweierer Strasse 54**
**D-7602 Oberkirch (DE)**

(72) Erfinder : **Brucher, Egon, Ing.grad.**
**Hebelstrasse 51**
**D-7630 Seelbach (DE)**
Erfinder : **Brucher, Frieda**
**Hebelstrasse 51**
**D-7630 Seelbach (DE)**

(74) Vertreter : **Patentanwälte Dipl.-Ing. Hans Schmitt**
**Dipl.-Ing. Wolfgang Maucher**
**Dreikönigstrasse 13**
**D-7800 Freiburg i.Br. (DE)**

Jouve, 18, rue St-Denis, 75001 Paris, France

## Behälter für Lebensmittel

Die Erfindung betrifft einen Behälter für Lebensmittel, mit einer in seinem Inneren befindlichen Verdunstungs-Kühlvorrichtung, die einen Wasserbehälter sowie einen davon befeuchteten Verdunster aufweist, wobei der Behälter Belüftungsöffnungen hat.

Das Aufbewahren von Lebensmitteln in derartigen, bereits bekannten Behältern hat den Vorteil, daß in deren Inneren durch die Verdunstungs-Kühlvorrichtung etwa ein Klima wie in einem feuchten Keller nachgebildet wird, was insbesondere für die Vorratshaltung z. B. von Gemüse, Obst, Käse, Wein, Kartoffeln vorteilhaft ist. Derartige Behälter sind z. B. aus der GB-A-303 232 und der US-A-1 422 365 bekannt.

Nachteilig ist jedoch, daß die von Zeit zu Zeit notwendige Bedienung und Wartung der Kühlvorrichtung umständlich ist, so daß unter Umständen eine durchgehend gleichmäßige Kühl- und Feuchthaltewirkung nicht immer gewährleistet ist. Bezüglich der Bedienung der Kühlvorrichtung sei erwähnt, daß für eine ausreichende Wirkungsweise über einen längeren Zeitraum sich gegebenenfalls ansetzende Kalkrückstande an dem Verdunster entfernt werden müssen.

Aus der CH-A-411 010 ist es bekannt, bei einen Kühlschrank das Kühlaggregat an der Vorderseite des Kühlschrankgehäuses anzuordnen.

Der Erfindung liegt nun die Aufgabe zugrunde, einen Vorratsbehälter der eingangs erwähnten Art mit einer Verdunstungs-Kühlvorrichtung zu schaffen, bei dem die von Zeit zu Zeit notwendige Bedienung vereinfacht ist.

Zur Lösung dieser Aufgabe wird erfindungsgemäß insbesondere vorgeschlagen, daß die Kühlvorrichtung im Bereich der schließbaren Behälterzugangsöffnung angeordnet ist und daß ein nachziehbarer Vorrat einer durchtrennbaren Verdunster-Bahn vorgesehen ist, dessen freies Ende in den Wasserbehälter taucht. Eine solche Kühlvorrichtung ist in vorteilhafter Weise besonders gut zugänglich, so daß die von Zeit zu Zeit notwendigen Arbeiten, z. B. das Nachfüllen von Wasser oder aber das Ersetzen des Verdunsters besonders einfach vorgenommen werden kann.

Vorzugsweise ist dabei die Kühlvorrichtung an der Innenseite der Tür od. dgl. des Behälters angebracht. Die gesamte Kühlvorrichtung wird somit beim Öffnen der Tür mit ausgeschwenkt und ist damit besonders gut zugänglich.

Eine Weiterbildung der Erfindung sieht vor, daß der Verdunster-Vorrat rollenförmig aufgewickelt ist. Dadurch kann durch Nachziehen eines entsprechenden Abschnittes von der Vorratsrolle ein z. B. durch Kalkrückstände unbrauchbar gewordener Verdunster-Bahnabschnitt einfach ersetzt werden.

Eine abgewandelte Ausführungsform sieht vor, daß der Verdunster-Vorrat lagenartig, z. B. zickzack-förmig zusammengelegt ist, wobei eine oder mehrere Lagen-Längen vorzugsweise etwa dem Abstand von der Aufhängung des Verdunsters zu dem Wasserbehälter entspricht. Somit ist bereits durch die zusammengelegten Einzellagen die vorgesehene Länge des jeweils den Verdunster bildenden Bahnabschnittes festgelegt. Die Handhabung beim Ersetzen eines verbrauchten Verdunsters ist somit besonders einfach.

Zweckmäßigerweise sind im Bereich vorzugsweise unmittelbar unterhalb der Kühlvorrichtung, Zutrittsöffnungen für eine Belüftung und am oberen Ende des Behälters, insbesondere an einer der Kühlvorrichtung abgewandten Stelle, Austrittsöffnungen vorgesehen. Bei dieser Anordnung ist eine besonders wirksame Durchlüftung und eine ensprechende Kühlwirkung vorhanden.

Vorzugsweise ist im Bereich der Aufhängung der Verdunster-Bahn eine Trennvorrichtung für diese vorgesehen. Vor dem Nachziehen einer neuen Verdunster-Bahn kann die unbrauchbare Verdunster-Bahn besonders einfach ohne zusätzliche Hilfsmittel abgetrennt werden. Nach einer Weiterbildung der Erfindung ist ein Wasserstandsanzeiger, vorzugsweise ein von außen insbesondere bei geschlossenem Behälter ablesbarer , vorgesehen. Die Möglichkeit der Wasserstandskontrolle von außen hat den Vorteil, daß ein das Innenklima des Behälters störendes Öffnen vermieden werden kann. Außerdem ist ohne Handhabung eine schnelle Kontrolle möglich. Des weiteren ist es sinnvoll, die Behälter so auszubilden, daß ein Nachkauf bzw. Erweitern ohne Umbau möglich ist, so daß im Keller oder in der Speisekammer ein regalartiges Gebilde entstehen kann, das über den vorgenannten Nutzen mannigfaltig verwendet werden kann.

Zusätzliche Ausgestaltungen der Erfindung sind in weiteren Unteransprüchen aufgeführt. Nachstehend ist die Erfindung mit ihren wesentlichen Einzelheiten anhand der Zeichnung noch näher erläutert.

Es zeigt :

Figur 1 eine Aufsicht eines Behälters bei geöffneter Behältertür,

Figur 2 einen Querschnitt des Behälters und

Figur 3 eine Vorderansicht des Behälters bei geöffneter Behältertür.

Ein im ganzen mit 1 bezeichneter Behälter dient zur Vorratshaltung von Lebensmitteln, bei denen insbesondere ein Feuchtigkeitsentzug, wie er z. B. im üblichen Kühlschrank auftritt, zu einer Qualitätsminderung führen würde.

Erwähnt seien hierbei insbesondere Gemüse, Obst, Käse, Wein Kartoffeln usw.

Der Behälter 1 weist in seinem Inneren eine Verdunstungs-Kühlvorrichtung 2 mit einem Wasserbehälter 3 sowie einem mit einem Ende darin eintauchenden, saugfähigen Verdunster 4 auf. Der Verdunster 4 ist hier durch einen Bahnabschnitt z. B. eines saugfähigen Papieres von auch in nassem Zustand ausreichender Festigkeit, insbesondere Vlies- oder Fliespapier od. dgl. gebildet, welches nach Verbrauch, d. h. nach dem Verkalken, einfach abgerissen oder abgeschnitten werden kann.

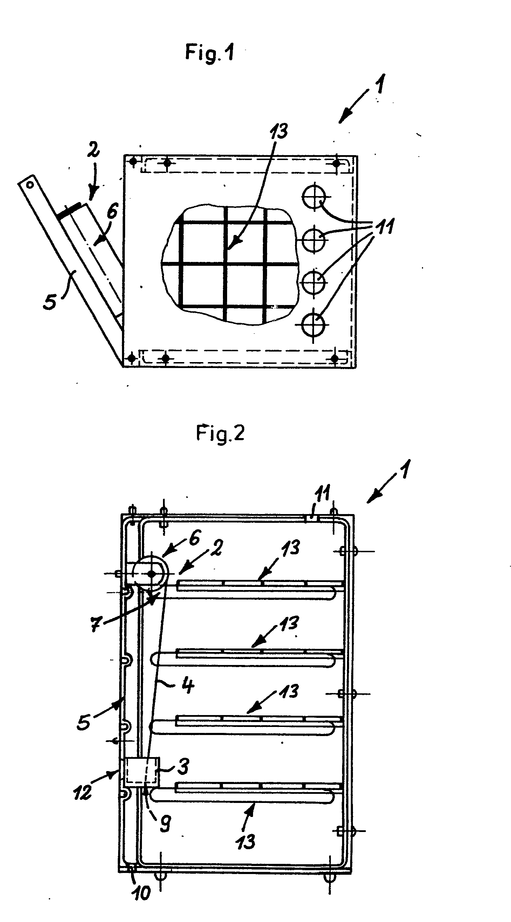

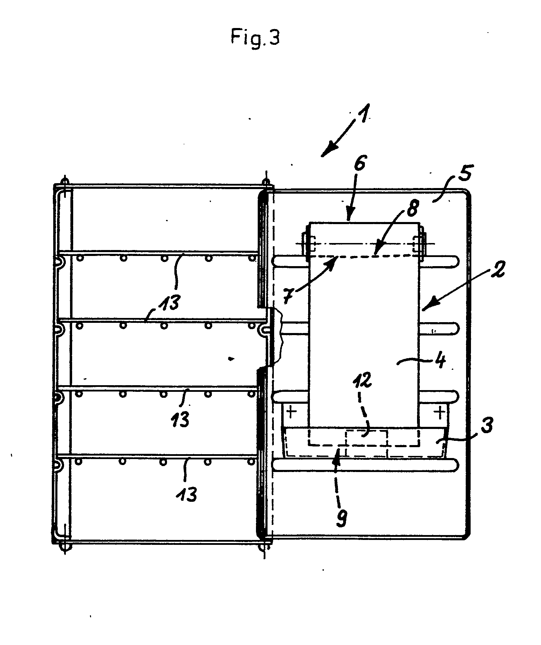

Erfindungsgemäß ist die gesamte Kühlvorrichtung 2 zumindes im Bereich der Behälterzugangsöffnung, vorzugsweise, wie in den Figuren erkennbar, an der Innenseite der Tür 5 des Behälters 1 angebracht. Insbesondere Fig. 2 und 3 lassen erkennen, daß der Verdunster-Vorrat 6 rollenartig aufgewickelt ist. Dadurch kann besonders einfach ein entsprechendes Verdunster-Bahnstück von dem Rollenvorrat nachgezogen und die vorher aktive, nach einiger Zeit verkalkte Verdunster-Bahn abgetrennt werden. Vorteilhaft ist dabei, wenn im Bereich der Aufhängung 7 der Verdunster-Bahn eine in den Figuren nicht gezeigte Trennvorrichtung vorgesehen ist. Gegebenenfalls könnte auch eine in Fig. 3 angedeutete Perforierung 8 zum leichteren Abtrennen eines verbrauchten Verdunsters 4 — in diesem Falle ohne weitere Hilfsmittel — vorgesehen sein. Die Abstände der Perforierungen 8 voneinander sind dabei dann zweckmäßigerweise so vorgesehen, daß sie auch etwa der Gesamtlänge des mit seinem unteren Ende 9 in den Wasserbehälter 3 eintauchenden Verdunsters 4 entspricht.

In Abwandlung zu dem dargestellten Ausführungsbeispiel könnte der Verdunster-Vorrat auch lagenartig, z. B. zickzack-förmig zusammengelegt sein, wobei eine oder mehrere Lagen vorzugsweise etwa dem Abstand von der Aufhängung 7 des Verdunsters 4 zu dem Wasserbehälter 3 bzw. zum unteren Ende 9 des Verdunsters 4 entspricht. Dadurch ist bereits die Länge des nachzuziehenden Verdunsters durch die Lagenlänge bzw. -längen festgelegt. Gegebenenfalls könnte auch ein entsprechender Spender für den Verdunster-Vorrat vorgesehen sein, indem einzelne bereits der vorgesehenen Länge eines Verdunsters entsprechende Abschnitte eingelegt sind, die jeweils beim Nachziehen bzw. Abnehmen eines verbrauchten Verdunsters 4 einen nächsten Abschnitt mit seinem Ende aus dem Spender herauszieht. Dies kann durch entsprechende Faltung der Verdunster-Abschnitte erreicht werden.

Um eine gewünschte Befeuchtung und Kühlung innerhalb des Behälters 1 zu erzielen, sind im Bereich vorzugsweise unmittelbar unterhalb der Kühlvorrichtung 2 Zutrittsöffnungen 10 (Fig. 2) für eine Belüftung und am oberen Ende des Behälters 1, insbesondere an einer der Kühlvorrichtung 2 abgewandten Stelle, Austrittsöffnungen 11 vorgesehen. Durch diese Anordnung der Belüftungsöffnungen 10, 11 wird eine gute Durchklimatisierung des Innenraumes des Behälters 1 erreicht. Die Größe der Belüftungsöffnungen kann etwa 0,2 cm bis 5 cm und die Gesamtfläche der Öffnungen etwa 10 cm$^2$ bis zu 600 cm$^2$ betragen. Insbesondere werden die Belüftungsöffnungen nach der jeweiligen Behältergröße bemessen sein. Wesentlich ist dabei, daß die Durchlüftung in Abstimmung auf das Behältervolumen sowie die Verdunsterfläche vorgesehen ist, um eine optimale Klimatisierung zu erzielen. Zur Kontrolle des Wasservorrates in dem Wasserbehälter 3 kann noch ein Wasserstandsanzeiger vorgesehen sein, der insbesondere bei geschlossenem Behälter 1 ablesbar ist. Dazu kann die Behälterwand im Bereich des Wasserbehälters 3 einen durchsichtigen Bereich 12 haben. Zweckmäßigerweise ist dabei auch der Wasserbehälter 3 selbst, jedoch zumindest bei dem Bereich 12 durchsichtig. Somit kann von außen der Wasserstand einfach kontrolliert werden.

In den Figuren ist noch gut erkennbar, daß in dem Behälter 1 mehrere übereinander angeordnete Fachböden 13, die hier rostartig ausgebildet sind, vorgesehen sind.

Es sei noch erwähnt, daß der Wasserbehälter 3 und/oder der Verdunster-Vorrat 6 in ihrer jeweiligen Höhenlage innerhalb des Behälters 1 veränderbar sein können. Damit besteht unter anderem die Möglichkeit, die Verdunsterfläche und damit auch die Klimatisierung innerhalb des Behälters 1 unter anderem an die aufzubewahrenden Lebensmittel anpassen zu können.

Bei Ausbildung der Verdunstungs-Kühlvorrichtung 2 als Einbausatz ist diese durch die in unterschiedlichem Abstand voneinander montierbaren Elemente (Wasserbehälter 3, Verdunster-Vorrat 6) auch leicht an unterschiedliche Behältergrößen anpaßbar.

## Ansprüche

1. Behälter (1) für Lebensmittel mit einer in seinem Inneren befindlichen Verdunstungs-Kühlvorrichtung (2), die einen Wasserbehälter (3) sowie einen davon befeuchteten Verdunster (4) aufweist, wobei der Behälter Belüftungsöffnungen (10, 11) dadurch gekennzeichnet, daß die Kühlvorrichtung (2) im Bereich der schließbaren Behälterzugangsöffnung angeordnet ist und daß ein nachziehbarer Vorrat (6) einer durchtrennbaren Verdunster-Bahn vorgesehen ist, deren freies Ende in den Wasserbehälter taucht.

2. Behälter nach Anspruch 1, dadurch gekennzeichnet, daß die Kühlvorrichtung (2) an der Innenseite der Tür (5) od. dgl. des Behälters (1) angebracht ist.

3. Behälter nach Anspruch 1 oder 2, dadurch gekennzeichnet, daß der Verdunster-Vorrat (6) rollenförmig aufgewickelt ist.

4. Behälter nach Anspruch 1 oder 2, dadurch gekennzeichnet, daß der Verdunster-Vorrat (6) lagenartig, z. B. zickzack-förmig zusammengelegt ist, wobei eine oder mehrere Lagen-Längen vorzugsweise etwa dem Abstand von der Aufhängung (7) des Verdunsters (4) zu dem Wasserbehälter (3) entspricht.

5. Behälter nach einem der Ansprüche 1 bis 4, dadurch gekennzeichnet, daß im Bereich vorzugsweise unmittelbar unterhalb der Kühlvorrichtung (2) Zutrittsöffnungen (10) für eine Belüftung und am oberen Ende des Behälters (1), insbesondere an einer der Kühlvorrichtung (2) abgewandten Stelle, Austrittsöffnungen (11) vorgesehen sind.

6. Behälter nach Anspruch 5, dadurch gekennzeichnet, daß die Größe der Belüftungsöffnungen (10, 11) etwa 0,2 cm bis 5 cm und die Gesamtfläche der Öffnungen etwa 10 cm² bis 600 cm² betragen.

7. Behälter nach einem der Ansprüche 1 bis 6, dadurch gekennzeichnet, daß im Bereich der Aufhängung (7) der Verdunster-Bahn eine Trennvorrichtung für diese vorgesehen ist.

8. Behälter nach einem der Ansprüche 1 bis 7, dadurch gekennzeichnet, daß ein Wasserstandsanzeiger, vorzugsweise ein von außen insbesondere bei geschlossenem Behälter ablesbarer vorgesehen ist.

9. Behälter nach Anspruch 8, dadurch gekennzeichnet, daß die Behälterwand im Bereich des Wasserbehälters (3) oder seines Wasserstandsanzeigers, durchsichtig ist.

10. Behälter nach einem der Ansprüche 1 bis 9, dadurch gekennzeichnet, daß der Verdunster (4) aus saugfähigem Papier von auch in nassem Zustand ausreichender Festigkeit, insbesondere Vlies- oder Fliespapier od. dgl. vorgesehen ist, das vorzugsweise Perforationen (8) zum Abtrennen aufweist.

11. Behälter nach einem der Ansprüche 1 bis 10, dadurch gekennzeichnet, daß der Wasserbehälter (3) und/oder der Verdunster-Vorrat (6) in ihren Höhenlagen im Behälter bzw. in ihrem Abstand voneinander veränderbar sind.

12. Behälter nach einem der Ansprüche 1 bis 11, dadurch gekennzeichnet, daß der Behälter (1) reihungsfähig, d. h. beliebig aneinanderbaubar ist.

## Claims

1. Container (1) for foodstuffs, with an evaporative cooling device (2) which is located in the interior thereof and comprises a water container (3) and an evaporator (4) moistened thereby, the container having ventilation apertures (10, 11), characterised in that the cooling device (2) is arranged in the region of the closable access opening of the container and that a stock (6) of a severable evaporator web, from which stock additional web can be drawn, is provided, the free end of web dipping into the water container.

2. Container according to Claim 1, characterised in that the cooling device (2) is fitted to the inside of the door (5) or the like of the container (1).

3. Container according to Claim 1 or 2, characterised in that the evaporator stock (6) is wound up in the form of a roll.

4. Container according to Claim 1 or 2, characterised in that the evaporator stock (6) is folded up in the manner of layers, for example in zigzag form, one or more lengths of layer preferably corresponding approximately to the distance of the mounting (7) of the evaporator (4) from the water container (3).

5. Container according to one of Claims 1 to 4, characterised in that, preferably in the region immediately below the cooling device (2), access apertures (10) for ventilation and, at the upper end of the container (1), in particular at a point facing away from the cooling device (2), outlet apertures (11) are provided.

6. Container according to Claim 5, characterised in that the size of the ventilation apertures (10, 11) is about 0.2 cm to 5 cm, and the total area of the apertures is about 10 cm² to 600 cm².

7. Container according to one of Claims 1 to 6, characterised in that, in the region of the mounting (7) of the evaporator web, a severing device for the latter is provided.

8. Container according to one of Claims 1 to 7, characterised in that a water level indicator, preferably an indicator which can be read from the outside, in particular while the container is closed, is provided.

9. Container according to Claim 8, characterised in that the container wall is transparent in the region of the water container (3) or its water level indicator.

10. Container according to one of Claims 1 to 9, characterised in that the evaporator (4) provided consists of absorbent paper of a strength which is adequate even in the wet state, in particular paper mats or blotting paper or the like, which preferably has perforations (8) for severing.

11. Container according to one of Claims 1 to 10, characterised in that the heights of the water container (3) and/or the evaporator stock (6), where they are mounted in the container, or their mutual distance are variable.

12. Container according to one of Claims 1 to 11, characterised in that the container (1) can be extended in rows, that is to say containers can be fitted to one another in any desired way.

## Revendications

1. Récipient (1) pour aliments muni d'un dispositif de refroidissement par évaporation (2) situé à l'intérieur, qui présente un réservoir à eau (3) ainsi qu'un évaporateur (4) humidifié par celui-ci, le récipient présentant des ouvertures d'aération (10, 11), caractérisé en ce que le dispositif de refroidissement (2) est disposé dans la région de l'ouverture d'accès du récipient, qui peut être fermée, et en ce qu'il est prévu une réserve (6), pouvant être tirée d'une bande d'évaporation, pouvant être coupée, dont l'extrémité libre plonge dans le réservoir à eau.

2. Récipient selon la revendication 1, caractérisé en ce que le dispositif de refroidissement (2) est disposé du côté intérieur de la porte (5) ou partie similaire du récipient (1).

3. Récipient selon l'une des revendications 1 ou 2, caractérisé en ce que la réserve d'évaporation (6) est enroulée sous forme de bobine.

4. Récipient selon l'une des revendications 1 et 2, caractérisé en ce que la réserve d'évaporation (6) est pliée sur elle-même en couches, par exemple en zig-zag, une ou plusieurs longueurs de couche correspondant, de préférence, à peu près à la distance entre la suspension (7) de l'évaporateur (4) et le réservoir à eau (3).

5. Récipient selon l'une des revendications 1 à 4, caractérisé en ce que dans la région du dispositif de refroidissement (2), de préférence immédiatement en dessous de celui-ci, sont prévues des ouvertures d'accès (10) pour une aération et qu'à l'extrémité supérieure du récipient (1), en particulier à un endroit opposé au dispositif de refroidissement (2), sont prévues des ouvertures de sortie (11).

6. Récipient selon la revendication 5, caractérisé en ce que la grandeur des ouvertures d'aération (10, 11) est d'environ 0,2 à 5 cm et l'aire totale des ouvertures, d'environ 10 à 600 cm².

7. Récipient, selon l'une des revendications 1 à 6, caractérisé en ce que dans la région de la suspension (7) de la bande d'évaporation est prévu un dispositif de séparation de celle-ci.

8. Récipient selon l'une des revendications 1 à 7, caractérisé en ce qu'il est prévu un indicateur de niveau d'eau, de préférence lisible de l'extérieur, en particulier quand le récipient est fermé.

9. Récipient selon la revendication 8, caractérisé en ce que la paroi du récipient est transparente dans la région du réservoir à eau (3) ou de son indicateur de niveau d'eau.

10. Récipient selon l'une des revendications 1 à 9, caractérisé en ce que l'évaporateur (4) est formé de papier absorbant d'une résistance suffisante, même à l'état humide, en particulier du papier en nappe, ou du papier buvard, ou similaire, qui présente, de préférence, des perforations (8) pour la séparation.

11. Récipient selon l'une des revendications 1 à 10, caractérisé en ce que le réservoir à eau (3) et/ou la réserve d'évaporation (6) sont variables quant à leur position de hauteur dans le récipient ou quant à leur distance mutuelle.

12. Récipient selon l'une des revendications 1 à 11, caractérisé en ce que le récipient (1) est apte à l'alignement, c'est-à-dire que l'on peut en assembler un nombre quelconque.

Fig.1

Fig.2

Fig.3